# EUROPÄISCHE PATENTSCHRIFT

(11) **EP 1 092 341 B1**
(45) Veröffentlichungstag und Bekanntmachung des Hinweises auf die Patenterteilung: **01.12.2004**
(21) Anmeldenummer: 00120980.8
(22) Anmeldetag: 27.09.2000
(51) Int. Cl.: A01D 41/14

(54) **Vorrichtung zur Aufnahme und Halterung einer Schneidwerksbaugruppe am schwenkbaren Schrägförderer eines selbstfahrenden Mähdreschers**
Device for receiving and holding a cutting assembly on a pivotabel elevator conveyor of a self-propelled combine harvester
Dispositif pour recevoir et maintenir un ensemble de coup sur un convoyeur-élévateur pivotable d'une moissonneuse-batteuse automotrice

(30) Priorität: 13.10.1999 DE 19949213
(43) Veröffentlichungstag der Anmeldung: 18.04.2001
(73) Patentinhaber: CLAAS Selbstfahrende Erntemaschinen GmbH, 33428 Harsewinkel (DE)
(72) Erfinder: Bürmann, Dominik, 33415 Verl (DE)

(56) Entgegenhaltungen:
- CH-A- 689 077
- DE-C- 4 429 384
- US-A- 3 474 606
- US-A- 3 638 407
- US-A- 4 280 317

## Beschreibung

Die Erfindung betrifft eine Vorrichtung zur Anbringung und Halterung einer Einrichtung zur Aufnahme von Erntegut an einem schwenkbaren Schrägförderer zur Weiterleitung des Erntegutes in eine Erntemaschine, wie beispielsweise einem selbstfahrenden Mähdrescher, wobei die Vorrichtung an dem Gehäuse des Schrägförderers und zwar in seinem vorderen Bereich befestigte Aufnahmehaken aufweist zum Untergreifen eines einem jeden Aufnahmehaken zugeordneten Tragbolzens, die über je zwei voneinander beabstandeten Stegblechen mit dem oberen Abschluß der Rückwand der Schneidwerksmulde der Schneidwerksbaugruppe festverbunden sind.

Aus der US-PS 3.474.606 ist ein selbstfahrender Mähdrescher bekannt, dessen Schneidwerksmulde um eine ackerbodennahe horizontale Querachse schwenkbar am Schrägförderer befestigt ist, um die Winkellage des Messerbalkens zum Boden beispielsweise in Abhängigkeit von der zu erntenden Getreideart einstellen zu können. Zu diesem Zweck sind Stellmittel mechanischer oder hydraulischer Art vorgesehen, die einerseits an der Schneidwerksmuldenrückwand und andererseits am Schrägfördererkanal angelenkt sind, ohne allerdings eine Tragfunktion zu erfüllen. Durch Betätigung dieser Mittel wird die gesamte Schneidwerksmulde, also auch der Messerbalken, um die horizontale Tragachse mehr oder weniger verschwenkt. Zur Demontage der Schneidwerksmulde selbst müssen unter anderem die Stellmittel und die horizontale Tragachse vollständig ausgebaut werden. Dies ist insbesondere auf dem Acker selbst kaum möglich, weil wegen der immer vorhandenen Bodenunebenheiten die Lage der auf dem Acker abgestellten Schneidwerksmulde niemals genau parallel zu der Vorderachse des Mähdreschers verläuft und somit die horizontale Tragachse, über die Schneidwerksmulde mit dem Schrägförderkanal verbunden ist, verkanntet. Aus diesem Grund hat sich eine solche Vorrichtung in der Praxis nicht durchsetzen können.

Aus der DE-PS 44 29 384 ist eine Aufnahmeeinrichtung für ein Schneidwerk bekannt. Zu diesem Zweck sind an der Stirnseite des Schrägförderers hydraulische Arbeitszylinder vorgesehen, an deren freien Kolbenenden Aufnahmehaken befestigt sind. Desweiteren sind mit dem oberen Abschluß der Rückwand der Schneidwerksmulde des gesamten Schneidwerkes Stegbleche festverbunden, in den Tragbolzen gelagert sind. Zur Aufnahme und Befestigung der Schneidwerksmulde an den Schrägförderer der Erntemaschine werden die Kolben der hydraulischen Arbeitszylinder eingefahren und die Erntemaschine in eine korrespondierende Aufnahmeposition zu den mit dem oberen Rand der Rückwand der Schneidwerksmulde angebrachten Tragbolzen gebracht. Nachdem die Schneidwerksmulde durch Anheben des Schrägförderkanals von den Aufnahmehaken der hydraulischen Arbeitszylinder aufgenommen wurde und die Rückseite der Schneidwerksmulde an der Stirnfläche des Schrägfördererkanals anliegt, wird durch eine Bedienungsperson der Erntemaschine ein Sperriegel verschwenkt, wodurch die Stellung der Schneidwerksmulde zum Schrägfördererkanal gesichert ist.

Durch eine solche Einrichtung ist es demzufolge möglich, die Schneidwerksmulde einer Schneidwerksbaugruppe auf einfache Art und Weise auch auf dem Acker selbst mit dem Schrägfördererkanal eines Mähdreschers zu verbinden beziehungsweise von diesem zu lösen. Allerdings hat die durch diese Patentschrift bekannte Einrichtung den Nachteil, daß die Schneidwerksbaugruppe lediglich zusammen mit dem Schrägfördererkanal Bodenunebenheiten angepaßt werden kann. Eine spezielle Veränderung der Winkellage des Schneidmessers zum Ackerboden ist durch diese Einrichtung nicht möglich.

Der Erfindung liegt daher die Aufgabe zugrunde, die Vorrichtung gemäß der zuletzt genannten Patentschrift dahingehend weiterzubilden, daß die Schneidwerksmulde beziehungsweise das Schneidmesser selbst in seiner Winkellage gegenüber dem Schrägfördererkanal eingestellt werden kann. Diese Aufgabe wird dadurch gelöst, daß jedem Aufnahmehaken mehrere mit Abstand und parallel zueinander angeordnete Tragbolzen zugeordnet sind, und das die Schneidwerksbaugruppe im unteren Bereich der Schneidwerksmuldenrückwand mit dem Schrägfördererkanal über eine horizontale Achse schwenkbar verbunden ist. Der Vorteil einer derartigen Vorrichtung besteht darin, daß durch die Auswahl der Tragbolzen, die von den Aufnahmehaken während der Montage einer Schneidwerksbaugruppe an den Schrägfördererkanal eines selbstfahrenden Mähdreschers ergriffen werden, die Winkellage der Schneidwerksmulde und somit des Messerbalkens selbst zum Schrägfördererkanal in Abhängigkeit des zu erntenden Gutes auf einfache Art und Weise eingestellt werden kann.

Weitere vorteilhafte Ausführungsformen der Erfindung sind in den Unteransprüchen näher definiert.

Im folgenden soll die Erfindung anhand eines Ausführungsbespieles und mehrerer dieses darstellenden Figuren näher erläutert werden. Dabei zeigt:

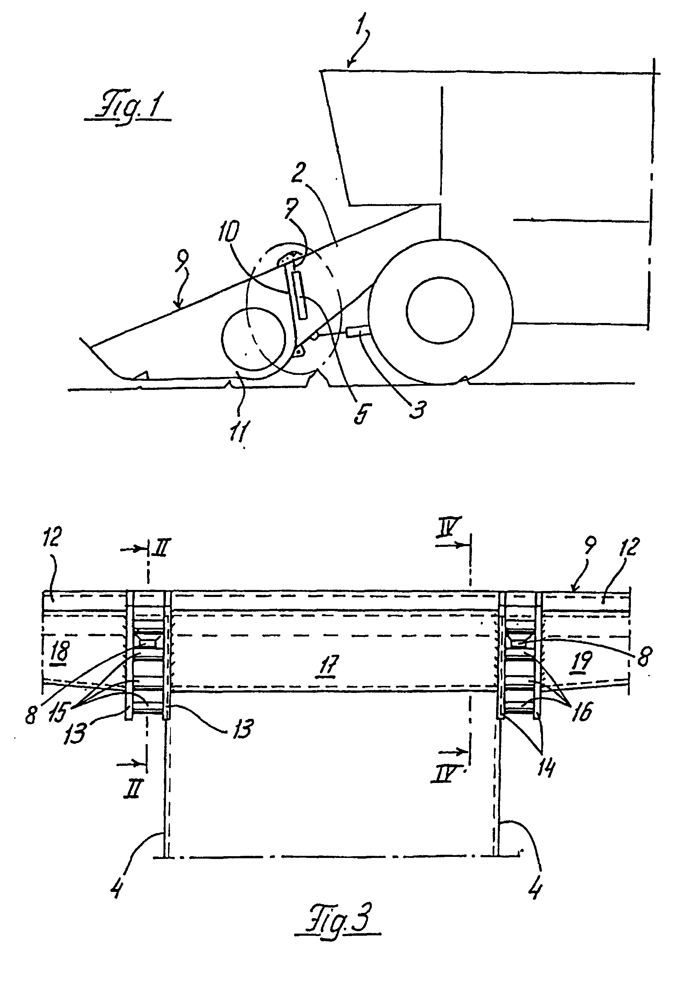

- Figur 1: den vorderen Teil eines selbstfahrenden Mähdreschers in der Seitenansicht,

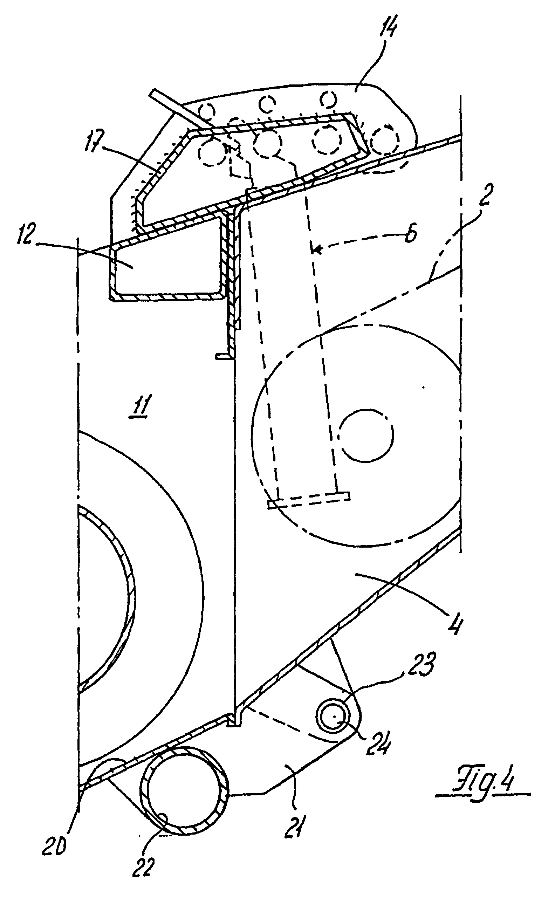

- Figur 2: den in Figur 1 strichpunktierten Bereich in vergrößerter Darstellung als Schnitt nach der Linie II-II der Figur 3,
- Figur 3: eine Draufsicht auf den in Figur 2 dargestellten Teil des Mähdreschers.
- Figur 4: eine Darstellung in der Ebene wie Figur 2 als Schnitt nach IV-IV.

Mit 1 ist der vordere Teil eines selbstfahrenden Mähdreschers bezeichnet, der in bekannter Weise einen Schrägförderer 2 aufweist, wobei letzterer über eine Kolbenzylindereinheit 3 schwenkbar mit dem Mähdrescher 1 verbunden ist. Mit den vorderen Bereichen der Schrägfördererseitenwände 4 sind Zylinder 5 von Kolbenzylindereinheiten 6 festverbunden, deren Kolbenstangen 7 an ihren frei auslaufenden Enden je einen Aufnahmehaken 8 aufweisen.

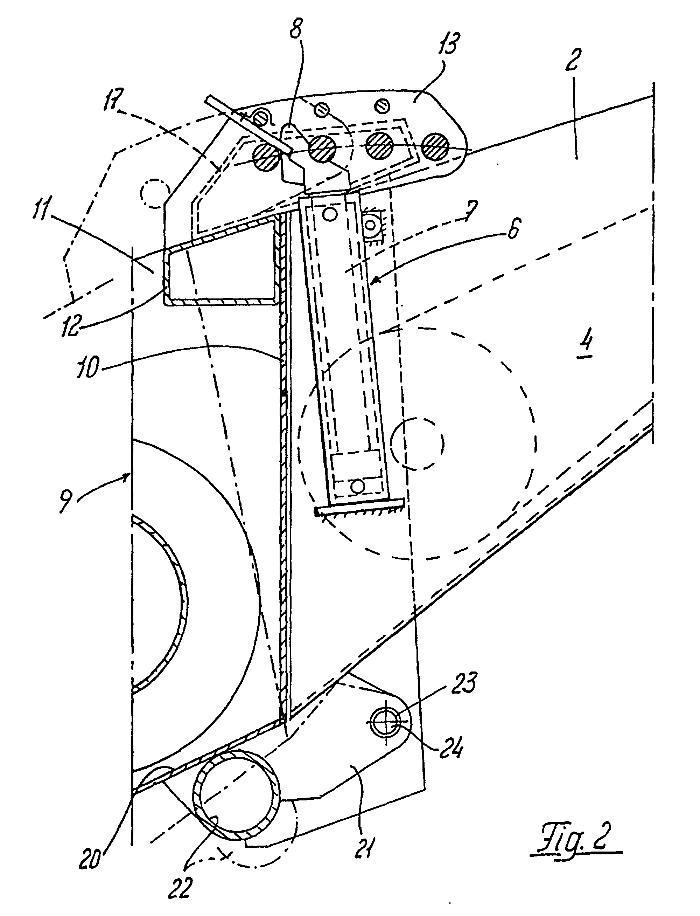

Zur Aufnahme der Schneidwerksbaugruppe 9 von den Aufnahmehaken 8 ist mit der Rückwand 10 der Schneidwerksmulde 11 im oberen Bereich ein über die ganze Breite der Schneidwerksmulde verlaufendes Verstärkungsprofil 12 festverbunden. Mit der Oberseite dieses Verstärkungsprofiles 12 sind zwei Gruppen von je zwei Stegplattenblechen 13 beziehungsweise 14 verschweißt. Diese Stegplatten 13 beziehungsweise 14 sind voneinander beabstandet und nehmen jeweils vier Tragbolzen 15 beziehungsweise 16 auf. Zur seitlichen Verstärkung der Stegbleche 13 beziehungsweise 14 sind diese mit Kastenrahmen 17 bis 19 seitlich verschweißt. Wie insbesondere aus der Figur 2 deutlich zu erkennen ist, überragen sowohl die Kastenprofile 17 bis 19 als auch die Stegbleche 13 und 14 die Rückwand 10 der Schneidwerksmulde 11 nach hinten. Auf diese Weise wird erreicht, daß die Aufnahmehaken 8 auf einfache Art und Weise ausgewählte Tragbolzen 15, 16 eines auf dem Acker abgelegten Schneidwerkes von unten ergreifen können.

Der Boden 20 der Schneidwerksmulde 11 ist im Bereich der Rückwand 10 mit zwei endseitigen Haltern 21 ausgerüstet, die miteinander durch ein Rohr 22 stabilisierend verbunden sind. Die frei auslaufenden Enden der Halter 21 weisen Durchgangsbohrungen 23 auf, in denen eine Achse 24 gelagert ist. Diese Achse 24 wird von zwei Verlängerungen der Seitenwand 4 des Schrägförderers 2 getragen. Um diese Achse 24 ist die gesamte Schneidwerksbaugruppe 9 und somit auch der nicht dargestellte Messerbalken in Abhängigkeit von der zu erntenden Gutart schwenkbar und zwar in Abhängigkeit davon, welche der Tragzapfen 15 und 16 von den Aufnahmehaken 8 ergriffen sind. Die mit strichpunktierten Linien dargestellte Lage der Rückwand 10 und der Stegbleche 13, 14 zeigt die maximal mögliche Schwenkstellung der Schneidwerksmulde zum Schrägfördererkanal. Soll nun die Schneidwerksbaugruppe 9 auf dem Acker abgesetzt werden, wird zunächst einmal die Achse 24 axial herausgezogen. Danach wird der Schrägförderer 2 soweit über die Kolbenzylindereinheit 3 nach unten verschwenkt, bis die Schneidwerksbaugruppe 9 auf dem Acker aufliegt. Sodann werden die Kolbenstangen 7 der Kolbenzylindereinheiten 6 eingefahren, wodurch sich die Aufnahmehaken 8 von den Tragzapfen 15, 16 lösen.

Das Ankuppeln einer auf dem Ackerboden abgelegten Schneidwerksbaugruppe 9 erfolgt in entsprechend umgekehrter Reihenfolge.

### Bezugszeichenliste

- 1 -: ein vorderer Teil
- 2 -: Schrägförderer
- 3 -: Kolbenzylindereinheit
- 4 -: Seitenwände
- 5 -: Zylinder
- 6 -: Kolbenzylindereiheiten
- 7 -: Kolbenstangen
- 8 -: Aufnahmehaken
- 9 -: schneidwerksbaugruppe
- 10 -: Rückwand
- 11 -: Schneidwerksmulde
- 12 -: Verstärkungsprofil
- 13 -: Stegplatten
- 14 -: Stegplatten
- 15 -: Tragbolzen
- 16 -: Tragbolzen
- 17 -: Kastenrahmen
- 18 -: Kastenrahmen
- 19 -: Kastenrahmen
- 20 -: Boden
- 21 -: Halter
- 22 -: Rohr
- 23 -: Durchgangsbohrungen
- 24 -: Achse

## Patentansprüche

1. Vorrichtung zur Anbringung und Halterung einer Einrichtung zur Aufnahme von Emtegut an einem schwenkbaren Schrägförderer (2) zur Weiterleitung des Erntegutes in eine Erntemaschine wie beispielsweise einen selbstfahrenden Mähdrescher, wobei die Vorrichtung an dem Gehäuse des Schrägförderers und zwar im seinem vorderen Bereich befestigt und Aufnahmehaken (8) aufweist zum Untergreifen eines einem jeden Aufnahmehaken zugeordnetem Tragbolzens (7), die über je zwei voneinander beabstandeten Stegplatten (13, 14) mit dem oberen Abschluss der Rückwand (10) der Schneidwerksmulde fest verbunden ist,
**dadurch gekennzeichnet,**
**dass** jedem Aufnahmehaken mehrere mit Abstand und parallel zueinander angeordnete Tragbolzen (14, 15) zugeordnet sind und dass die Schneidwerksbaugruppe (9) im unteren Bereich der Schneidwerksmuldenrückwand (10) mit dem Schrägförderkanal (2) über eine horizontale Achse (24) schwenkbar verbunden ist.

2. Vorrichtung zur Anbringung und Halterung einer Einrichtung zur Aufnahme von Erntegut nach Anspruch 1,
**dadurch gekennzeichnet,**
**dass** Aufnahmehaken in an sich bekannter an frei auslaufenden Enden von Kolbenstangen (7), deren Zylinder (5) mit den Seitenwänden (4) des Schrägförderers (2).verbunden sind.

3. Vorrichtung zur Anbringung und Halterung einer Einrichtung zur Aufnahme von Emtegut nach den Ansprüchen 1 und 2,
**dadurch gekennzeichnet,**
**dass** die Stegplatten (13, 14) die Schneidwerksmuldenrückwand (10) nach hinten überrageen und zumindest einige der Tragbolzen (15, 16) in den nach hinten auskragenden Bereichen der Stegplatten (13, 14) vorgesehen sind.

4. Vorrichtung zur Anbringung und Halterung einer Einrichtung zur Aufnahme von Emtegut nach den Ansprüchen 1, 2 und 3,
**dadurch gekennzeichnet,**
**dass** die Stegplatten (13, 14) zwecks seitlicher Aussteifung mit Kastenrahmen (17 bis 19) verbunden sind.

5. Vorrichtung zur Anbringung und Halterung einer Einrichtung zur Aufnahme von Emtegut nach Anspruch 4,
**dadurch gekennzeichnet,**
**dass** die Kastenrahmen (17 bis 19) mit dem oberen Abschluss der Schneidwerksmuldenrückwand (10) fest verbunden sind und diesen nach hinten überragen.

6. Vorrichtung zur Anbringung und Halterung einer Einrichtung zur Aufnahme von Erntegut nach den Ansprüchen 1 bis 5,
**dadurch gekennzeichnet,**
**dass** der obere Abschluss der Schneidwerksmuldenrückwand (10) als über die gesamte Breite in der Schneidwerksmuldenrückwand (10) verlaufendes Verstärkungsprofil (12) ausgebildet und mit dieser fest verbunden ist.

## Claims

1. Apparatus for mounting and holding a device for picking up crop material on a pivotable inclined conveyor (2) for passing the crop material into a harvester such as for example a self-propelled combine harvester, wherein the apparatus is fixed to the housing of the inclined conveyor and more specifically in the front region thereof and has pick-up hooks (8) for engaging under a carrier pin (7) which is associated with each pick-up hook and which is fixedly connected by way of two respective mutually spaced web plates (13, 14) to the upper termination of the rear wall (10) of the cutting mechanism tray, **characterised in that** associated with each pick-up hook are a plurality of carrier pins (14, 15) arranged in spaced and mutually parallel relationship and that the cutting mechanism assembly (9) is pivotably connected to the inclined conveyor passage (2) by way of a horizontal shaft (24) in the lower region of the cutting mechanism tray rear wall (10).

2. Apparatus for mounting and holding a device for picking up crop material according to claim 1 **characterised in that** pick-up hooks are disposed in per se known manner at freely terminating ends of piston rods (7) whose cylinders (5) are connected to the side walls (4) of the inclined conveyor (2).

3. Apparatus for mounting and holding a device for picking up crop material according to claims 1 and 2 **characterised in that** the web plates (13, 14) project rearwardly beyond the cutting mechanism tray rear wall (10) and at least some of the carrier pins (15, 16) are provided in the rearwardly cantilevered regions of the web plates (13, 14).

4. Apparatus for mounting and holding a device for picking up crop material according to claims 1, 2 and 3 **characterised in that** the web plates (13, 14) are connected to box frames (17 to 19) for the purposes of lateral stiffening.

5. Apparatus for mounting and holding a device for picking up crop material according to claim 4 **characterised in that** the box frames (17 to 19) are fixedly connected to the upper termination of the cutting mechanism tray rear wall (10) and project rearwardly beyond same.

6. Apparatus for mounting and holding a device for picking up crop material according to claims 1 to 5 **characterised in that** the upper termination of the cutting mechanism tray rear wall (10) is in the form of a reinforcing profile member (12) extending over the entire width in the cutting mechanism tray rear wall (10) and is fixedly connected thereto.

## Revendications

1. Dispositif de prise et de fixation d'un module de ramassage de produit récolté sur un convoyeur incliné pivotant (2), afin de transférer le produit récolté dans une machine de récolte, par exemple une moissonneuse-batteuse automotrice, le dispositif possédant sur le carter du convoyeur incliné, plus précisément dans sa partie antérieure, des crochets de soutien (8) destinés à prendre par le dessous un goujon de support (7) associé à chacun des crochets de support, lesquels goujons sont solidarisés avec l'extrémité supérieure de la paroi arrière du tablier du module de barre de coupe par des groupes de deux jumelles (13, 14) écartées l'une de l'autre, **caractérisé en ce qu'**à chaque crochet de soutien sont associés plusieurs goujons de support (14, 15) disposés parallèlement entre eux et écartés les uns des autres et **en ce que** le module de barre de coupe (9), dans la partie inférieure de la paroi arrière du tablier de coupe (10) est relié au carter du convoyeur incliné (2) en pouvant pivoter autour d'un axe horizontal (24).

2. Dispositif de prise et de fixation d'un module de ramassage de produit récolté selon la revendication 1, **caractérisé en ce que** les crochets de soutien, de manière connue en soi, sont fixés aux extrémités libres de tiges de piston (7) dont les vérins (5) sont fixés sur les parois latérales (4) du convoyeur incliné (2).

3. Dispositif de prise et de fixation d'un module de ramassage de produit récolté selon les revendications 1 et 2, **caractérisé en ce que** les jumelles (13, 14) font saillie vers l'arrière par rapport à la paroi arrière du tablier de coupe (10) et **en ce qu'**au moins certains des goujons de support (15, 16) sont prévus dans les parties des jumelles (13, 14) qui font saillie vers l'arrière.

4. Dispositif de prise et de fixation d'un module de ramassage de produit récolté selon les revendications 1, 2 et 3, **caractérisé en ce que** les jumelles (13, 14) sont reliées à des caissons (17 à 19) afin de leur offrir un renforcement latéral.

5. Dispositif de prise et de fixation d'un module de ramassage de produit récolté selon la revendication 4, **caractérisé en ce que** les caissons (17 à 19) sont solidaires de l'extrémité supérieure de la paroi arrière du tablier de coupe (10) et font saillie vers l'arrière par rapport à celle-ci.

6. Dispositif de prise et de fixation d'un module de ramassage de produit récolté selon les revendications 1 à 5, **caractérisé en ce que** l'extrémité supérieure de la paroi arrière du tablier de coupe (10) prend la forme d'un profil de renforcement (12) s'étendant sur toute la largeur de la paroi arrière du tablier de coupe (10) et est solidaire de celle-ci.
